(19) **Europäisches Patentamt**

**European Patent Office**

**Office européen des brevets**

(11) **EP 1 135 343 B1**

(12) **EUROPEAN PATENT SPECIFICATION**

(45) Date of publication and mention
of the grant of the patent:
**30.07.2003 Bulletin 2003/31**

(51) Int Cl.[7]: **C03B 19/10**
// C03C12:00

(21) Application number: **99953066.0**

(22) Date of filing: **06.10.1999**

(86) International application number:
**PCT/US99/23241**

(87) International publication number:
**WO 00/020345 (13.04.2000 Gazette 2000/15)**

(54) **PROCESS AND APPARATUS FOR MAKING GLASS BEADS**

VERFAHREN UND VORRICHTUNG ZUR HERSTELLUNG VON GLASKUGELN

PROCEDE ET APPAREIL POUR FABRIQUER DES BILLES DE VERRE

(84) Designated Contracting States:
**AT BE CH CY DE DK ES FI FR GB GR IE IT LI LU MC NL PT SE**

(30) Priority: **06.10.1998 US 167942**

(43) Date of publication of application:
**26.09.2001 Bulletin 2001/39**

(73) Proprietor: **PQ Holding, Inc.
Wilmington, Delaware 19803 (US)**

(72) Inventors:
• **Jackson, Raymond
Spennymoor, Durham DL6 6RX (GB)**
• **Witt, Reinhard H.
Wharton, NJ 07885 (US)**
• **Braun, Rudolf K.
Wharton, NJ 07885 (US)**
• **Lau, John W.
North Potomac, MD 20878 (US)**

(74) Representative: **Wess, Wolfgang, Dipl.-Ing.
Patentanwalt,
Stuntzstrasse 16
81677 München (DE)**

(56) References cited:
**EP-A- 0 392 040          WO-A-87/00827
US-A- 3 877 914          US-A- 3 907 537**

• **DATABASE WPI Section Ch, Week 198530
Derwent Publications Ltd., London, GB; Class
L01, AN 1985-180661 XP002900878 & JP 60
108328 A (OHARA KOGAKUGARASU), 13 June
1985 (1985-06-13)**

**Description**

FIELD OF THE INVENTION

This invention relates to the manufacture of glass beads and more particularly to a process and apparatus for producing such beads in a relatively high fraction of round beads.

BACKGROUND OF THE INVENTION

There are many industrial and commercial uses for glass beads. For example, such beads have been used primarily to improve the reflectivity of a surface, such as by being used on highway signs, within paint to be applied to a roadway, on motion picture screens, and on advertising signs. Glass beads have also been used as fillers for thermoplastic and thermosetting resins. Other uses include the use of glass beads as the medium for grit blasting and for peening certain metals. In addition, glass beads can also be used in reflective clothing. Glass beads can also be coated with metal and used as a conductive medium.

For many of these applications, certain properties of the beads are important. For example, in some applications, it is important to have very small beads, such as smaller than 600 microns in diameter. In other applications, it is important that a high percentage of the beads, within the distribution of beads, are round. For example, in reflective applications such as on highway signs, in paint, or on clothing, it is important that the glass beads are round to achieve maximum reflectivity, also described as retroreflectivity in the roadway striping industry. Also, in metal grit blasting and peening applications, round beads provide a uniform cleaning force and surface hardening effect. Other properties, such as strength, coefficient of expansion, index of refraction, electrical resistivity, magnetic susceptibility, and color, of the beads are also important in many applications. These properties are greatly influenced by the way in which the beads are made.

Various methods have been employed in the formation of glass beads. Glass beads have been made by introducing glass particles into a flame in a draft tube or stack, as disclosed in U.S. Patent No. 2,334,578 to R. H. Potters. Another method for making glass beads is the use of a strike wheel which strikes a stream of molten glass with sufficient force to cause the particles to break up shortly after being struck and be projected through a heated region and ultimately to a cooling region and a collection zone. Such a system is shown and disclosed in U.S. Patent No. 3,495,961. Still another method is disclosed in U.S. Patent No. 3,499,745, which discloses a process similar to the process disclosed in the '961 patent, but utilizes a rotor instead of a strike wheel. Other known methods of making glass beads include blowing a stream of burning gas across a stream of molten glass to disburse the glass into discreet particles. Such methods are disclosed in U.S. Patent No. 3,279,905 and German Patent No. 285,971.

In all of these processes, it has been difficult to design a system which will form glass beads having a maximum percentage of roundness. In fact, none of these process clearly discloses how to achieve optimum roundness (i.e., the percentage of round beads in a distribution). As discussed above, optimizing roundness improves the performance of the beads in their application.

More specifically, after being imparted with the force from either the strike wheel, rotor, or blowing gas, the stream shortly thereafter breaks up into filaments. As used herein, the term "filament" shall mean a single elongated quantity of molten glass of any shape but typically in the shape of a fiber or strand or spheroid after initially breaking up. As these filaments pass through the heated region of the particular process, they form spheres. However, if the filaments do not reside in the heated region for a long enough time and/or at a high enough temperature, a high percentage of the filaments do not have time to form round beads. On the other hand, if the filaments reside in the heated zone for a period too long and/or at a temperature too high, then the round beads tend to stick to one another and form satellite structures such as doublets or triplets, which are highly undesirable.

In sum, it has been difficult to design a system, either by modifying certain parameters at an existing plant or by designing a new plant, which forms glass beads having a high percentage of roundness. In addition, it has been particularly troublesome to form very small glass beads with a high percentage of roundness, and the effect of the glass bead size on the roundness distribution has not been fully understood.

SUMMARY OF THE INVENTION

In view of the shortcomings of the prior art discussed above, the present invention provides a method for making glass beads having a high percentage of roundness. According to the present invention, glass raw materials are melted and a stream of molten glass is provided. A force is imparted to the stream sufficient to cause the stream to break up into filaments and to pass through a heated region and into a cooling region. In the cooling region, which may be the atmosphere, the beads are cooled immediately after the beads exit the heated region to solidify the beads. At least one of certain parameters is adjusted to cause the filaments to reach, upon exiting the heated region, an exit state near a relaxation point at which a maximum percentage of the filaments have formed round beads. These parameters include the amount of heat applied to form the molten glass and to the heated region, the length of the heated region, the force imparted to the stream, and the composition of the molten glass. The relaxation point is achieved when a relaxation time has elapsed from the time at which the stream breaks up and is determined by the equation $\tau = (d \cdot \mu)/\sigma$, wherein $\tau$ is the relaxation time; $d$ is the diameter of the formed round beads; $\mu$ is the viscosity of the filaments during the relaxation time; and $\sigma$ is the surface tension of the filaments during the relaxation time.

According to a preferred system for carrying out the method of the present invention, glass raw materials are heated in a furnace to form a bath of molten glass. The furnace has an orifice for providing a stream of molten glass flowing from the bath of molten glass. A device, such as a strike wheel, a rotor, or a gas blower, is used to impart the force to the stream sufficient to cause the stream to break up into filaments and to pass through the heated region and into the cooling region. The cooling region serves to cool the beads immediately after the beads exit the heated region. A collection bin serves to collect the solidified beads. The values of the parameters identified above are selected consistent with the equation for relaxation time listed above.

According to an aspect of the present invention particularly suitable to a system which is already built, all of the parameters except for the force applied to the stream are first identified. The length of the heated region is fixed and the heat applied to both the furnace and the heated region is set to a certain value. After heating molten glass and providing a stream thereof, the force is calculated as the force necessary to cause the filaments to exit the heated region at an exit state near the relaxation point. An average temperature of the filaments as they travel through the heated region is determined and, consequently, average viscosity and surface temperature values, based on the average temperature, are also determined. The value of the force is selected as mentioned above, and the beads are cooled and collected.

According to the system for carrying out this method, a furnace heats glass raw materials to form a bath of molten glass having a predetermined composition and having an orifice for providing a stream of molten glass flowing from the bath of molten glass. The system also includes a device for imparting a force to the stream sufficient to cause the stream to break up and form filaments and to pass through a heated region, and into a cooling region for cooling the beads immediately after they exit the heated region, with the value of the force selected according to the relaxation time equation set forth above, using average surface tension and viscosity values. The system also includes a cooling region and a collection area.

It is to be understood that both the foregoing general description and the following detailed description are exemplary, but are not restrictive, of the invention.


BRIEF DESCRIPTION OF THE DRAWING


The invention is best understood from the following detailed description when read in connection with the accompanying drawing, in which:

Fig. 1 is a schematic diagram of a first embodiment of the present invention;

Fig. 2 is a schematic diagram of a second embodiment of the present invention; and

Fig. 3 is a schematic diagram of a third embodiment of the present invention.


DETAILED DESCRIPTION OF THE INVENTION


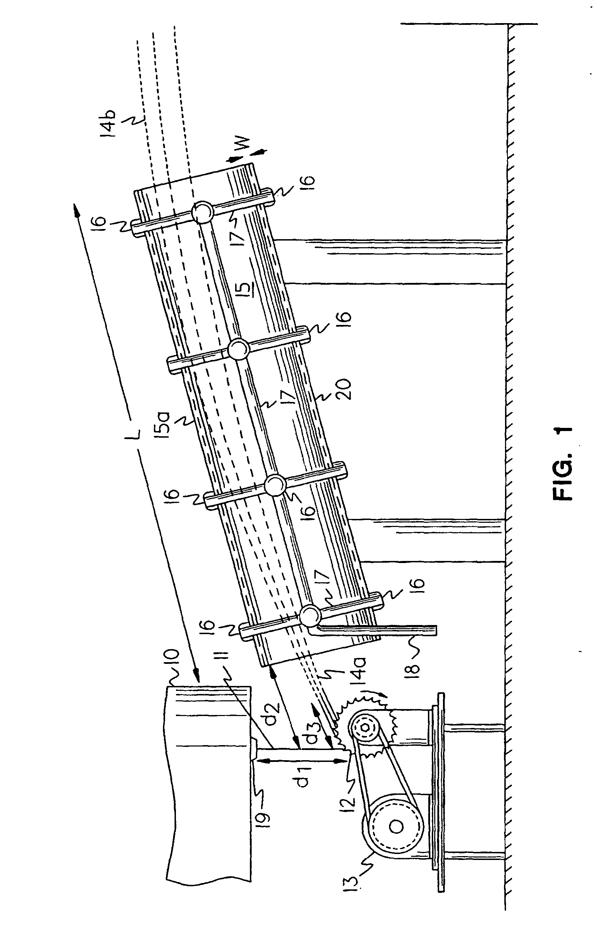

The present invention is directed to a method for making glass beads. More precisely, the present invention is also directed to a method of designing a system for making glass beads, either by designing a new system or modifying certain parameters in an existing system. This method of designing can be implemented in connection with any of the prior art processes discussed above and optimizes the fraction of round beads formed in a roundness distribution. The embodiments shown in Figs. 1-3 are particularly well-suited to the method of the present invention.

As used herein, the terms "glass," "glass raw materials," and "molten glass" shall have meanings consistent with their commonly-accepted meanings. In particular, glass is an inorganic product of fusion which has been cooled to a rigid condition without crystallizing. As is well known, glass-forming oxides include $SiO_2$, $GeO_2$, $B_2O_3$, $P_2O_5$, and $As_2O_3$. Conditional glass formers, which do not by themselves form glass will do so when melted with a suitable quantity of a second oxide or mixture of oxides, can also be used to make glass. Conditional glass formers include $TeO_2$, $SeO_2$, $MoO_3$, $WO_3$, $Bi_2O_3$, $Al_2O_3$, $Ga_2O_3$, and $V_2O_5$. Glass can also be formed by using certain modifying ions, such as alkali metal oxides or alkaline earth metal oxides. In addition, the process and apparatus of the present invention can be used in connection with glasses which are doped with certain other metals or constituents, such as a silver oxide or a transition metal oxide, to add other or improved properties to the glass, such as reflective properties or fluorescence.

Glass raw materials are any of the materials which, upon heating and melting, form the constituents of the glass referred to above. The most common glass raw materials are sand, soda ash, and limestone. Molten glass is simply that form of glass in which the glass can be worked due to its viscosity, i.e., shaped to form filaments and ultimately beads. Molten glass is primarily intended to cover glass which is within a range of viscosities suitable for atomization, for example, between about 1 and 1,000 poise and typically between about 10 and 100 poise.

Turning now to the drawing, Fig. 1 is a schematic diagram of a first embodiment consistent with the present invention. This embodiment is similar to an embodiment shown in U.S. Patent No. 3,495,961, mentioned above. As shown in Fig. 1, a furnace 10 is used to contain glass raw material and heat the raw materials, with a first amount of heat, to form a bath of molten glass in a conventional manner. Typically, the first amount of heat supplied to the furnace is sufficient to raise the temperature in the furnace to about 1300-1600°C. The furnace has an orifice 19 to provide a stream 11 of molten glass flowing downward from the bath of molten glass. The stream flows in a laminar, continuous stream and is directed to a strike wheel 12 driven by a motor 13. The strike wheel 12 is a multi-finned rotatable disk. Orifice 19 is adjustable so that stream 11 of molten glass can have a variable stream diameter. Additionally, stream 11 of molten glass travels a drain distance $d_1$ from orifice 19 to strike wheel 12. In an alternative embodiment of this invention, the furnace 10 includes several orifices, each of which provides a stream of molten glass which flows to a strike wheel or has a strike wheel individually associated with each stream. (In fact, three separate streams are shown in Fig. 1 as being projected from strike wheel 12 to demonstrate this embodiment.)

The molten glass impinging upon the periphery of strike wheel 12, indicated as revolving clockwise, is redirected by the force of the strike wheel. The force imparted by strike wheel 12 onto stream 11 of molten glass is sufficient to cause the stream to break up after travelling a distance $d_3$ into filaments 14a and to pass through a heated region 15 defined by a heater housing 15a. As is well-known, there is not a single point at which the stream breaks up and instantaneously forms a number of filaments corresponding to the number of beads ultimately formed; instead, the stream undergoes a primary break-up into primary filaments, which, in turn, break up into secondary filaments, which themselves might break up further into tertiary filaments. This process continues to a varying extent, depending on the particular conditions of the system and the composition, viscosity, and surface tension of the molten glass. At some point (typically within about 20% of the travel time of the filaments through a heated region), substantially all of the filaments have separated, so that the number of filaments substantially corresponds to the number of beads ultimately formed. As used herein, this point will be referred to as the "separation completion point." From the separation completion point forward, the volume of each filament remains about the same, and each filament's shape evolves towards the shape of a sphere due to the effects of surface tension.

For purposes of the present invention, the phrase "the time at which the stream breaks up" shall mean the median point between the time at which the stream first begins to break up into filaments and the separation completion point. High speed photography can be used to determine this median point precisely, but an approximation of about 10% of the travel time from the strike wheel to the end of the heated region is acceptable for many systems and glass compositions.

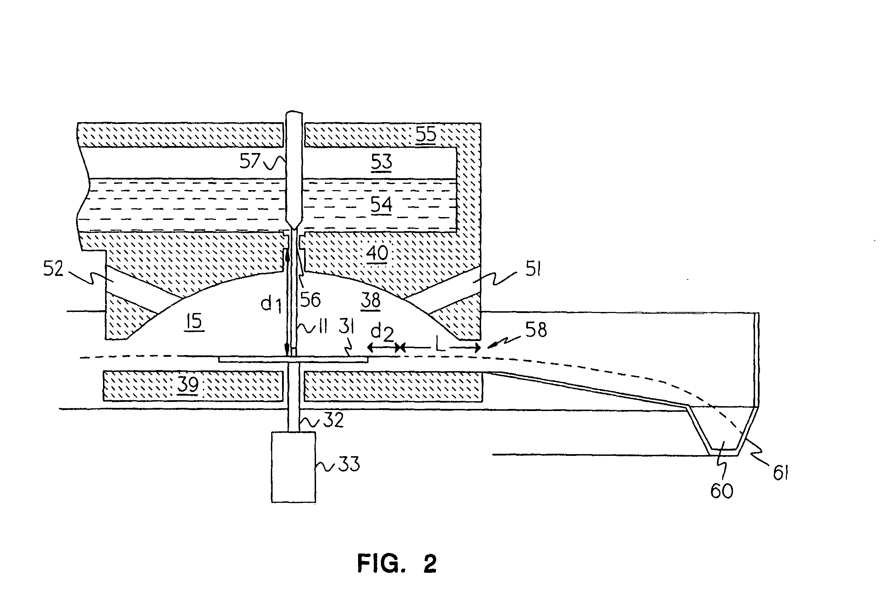

According to Fig. 1, the stream and filaments travel a cooling distance $d_2$ after being struck by strike wheel 12 but before entering heated region 15. Although not shown in Fig. 1, a larger heater could substantially encompass strike wheel 12 and its associated apparatus, but merely have openings to allow for the flow of stream 11 and filaments 14a. Such an embodiment is shown in Fig. 2. According to the embodiment shown in Fig. 2, the stream of molten glass 11 enters heated region 15 upon exiting the furnace and remains in the heated region while it is imparted with the appropriate force.

As shown in Fig. 1, strike wheel 12 has an axis of rotation perpendicular to the direction of travel of the stream 11 as the stream travels from furnace 10 to the strike wheel. As shown in Fig. 1, heated region 15 has a length L and is heated with a second amount of heat by burners 16 distributed over its surface. Burners 16 are connected together by conduit 17 with a source of suitable natural gas by a feeder 18. Although not shown, heated region 15 can be heated by other means, such as electrical heat.

The present invention is based on the recognition that the relaxation time, which is the difference between the time at which the stream breaks up (i.e., after travelling a distance $d_3$ from strike plate 12, which depicts the median point between the first break-up and the separation completion point) to the time when a maximum percentage of filaments 14a have formed round beads 14b (i.e., the relaxation point). The "maximum percentage" varies depending on system conditions arid glass compositions, but typically ranges between 70% and 99%. In some environments and with some glass compositions, it is simply not possible to obtain a higher roundness fraction than 70%, while other system conditions and glass compositions permit a maximum percentage of roundness approaching 100%. The method of determining whether a bead is round is described below.

The present invention is based on the fact that the relaxation time can be approximately obtained by the following equation:

$$\tau=(d\cdot\mu)/\sigma,$$

wherein $\tau$ is the relaxation time; d is the diameter of the formed round beads; $\mu$ is the viscosity of the filaments during the relaxation time; and $\sigma$ is the surface tension of the filaments during the relaxation time. The present invention involves selecting at least one parameter, or a number of parameters, to cause filaments 14a to reach, upon exiting heated region 15, an exit state near the relaxation point so that a maximum percentage of filaments 14a exit heated region 15 as round beads 14b.

As used herein, the term "exit state" is merely a way of defining the percentage of round beads. For many applications, it might be efficient or desirable to have the exit state only near, i.e., within about 75%, of the roundness of the maximum percentage. The system could be designed to cause the filaments to exit the heated region either at a point before all of the filaments have had the time to form round beads or after the filaments have had this time, but the percentage of roundness has decreased due to the formation of satellite particles (conglomerations of two or more beads). More preferably, the exit state is within a first range of the relaxation point such that at least about 90% of the maximum percentage is achieved. Most preferably, the exit state is within a second and more narrow range of the relaxation point such that at least about 95% of the maximum percentage is achieved.

The five primary parameters are the amount of heat applied to furnace 10, the amount of heat applied to heated region 15, the length L of heated region 15, the force imparted to stream 11 by strike plate 12, and the composition of the molten glass, as defined by the glass raw material. These five primary parameters are the most important. In preferred embodiments discussed below, however, other parameters can also be selected to aid in achieving the result of the exit state near the relaxation point being achieved as the filaments exit the heated region.

In practicing the present invention, the relationships between the parameters to the three variables in the equation for relaxation time, as well as how these parameters are varied, should be understood. First, with respect to the parameters of the heat applied, the amounts of heat applied to furnace 10 and to heated region 15 are varied in a known way. For example, the flow rate of gas to the burners heating these two components or the composition of the gas used to heat these components (or both) can be varied to vary the amounts of heat applied.

The amounts of heat directly affect two of the three variables in the equation for relaxation time, namely viscosity and surface tension. These variables are influenced by the amounts of heat because both of these variables are functions of the temperature of the filaments 14a as they travel through heated region 15. In general, viscosity is proportional to the inverse logarithm of temperature, so viscosity decreases with increasing temperature. On the other hand, surface tension is a weak function of temperature and typically remains relatively constant in relation to the viscosity at the temperature ranges practical for the filaments as they traverse the heated region 15. Therefore, for a given diameter which is desired of the formed beads, as more heat is applied to either component, the temperature of the filaments during the relaxation time will increase, which will cause the viscosity to decrease, which in turn will cause the necessary relaxation time to decrease. Accordingly, a heated region 15 having a shorter length L can be employed or less force can be imparted by strike wheel 12 (or a combination of both), when a greater amount of heat is applied to the furnace and the heater.

Several other factors influence the temperature of filaments 14a during the relaxation time. These factors include the distance $d_1$ which the stream 11 of molten glass travels between orifice 19 and strike wheel 12 and the distance $d_2$ which the stream and filaments 14a travel between strike wheel 12 and heated region 15. These two parameters contribute to the heat loss experienced by the molten glass as it travels in a relatively uninsulated environment. Therefore, with all other parameters constant, decreasing the length of these distances results in an increased temperature of the filaments during the relaxation time, which will cause the viscosity to decrease, which in turn will cause the relaxation time to decrease.

Another parameter which affects the temperature of the filaments 14a is the level of insulation applied to the system, namely, around furnace 10 and heated region 15. Insulation 20 is shown in Fig. 1, and the extent of insulation can be varied by varying the width "w" and the material used to insulate. As the extent of insulation increases, then the temperature of filaments 14a will increase, with all other parameters remaining constant. Accordingly, increasing the extent of insulation leads to the same effects as increasing the amounts of heat applied to the system, discussed above.

Another primary parameter, the force with which strike wheel 12 impacts stream 11, can be determined by the diameter of the strike wheel, the rotational speed of the strike wheel, the mass of the strike wheel, and the distribution of mass throughout the strike wheel. The way in which one determines the force needed is well-known. For example, one skilled in the art typically estimates the minimum input force required based on the difference between the surface energy of the stream and the sum of the surface energies of the filaments, plus the force required to propel the filaments across a distance to reach the collection bin. Typically, the force is then adjusted empirically. From the factors of tip speed of the wheel (a function of wheel diameter and rotational speed) and the mass and mass distribution of the wheel, the angular momentum of the strike wheel can be determined, and the speed of the molten glass stream as it emerges from the strike wheel can be determined by a momentum balance. For simplicity, and the speed of the molten glass stream emerging from the strike wheel and consequently the filaments can be assumed to be the tip speed of the strike wheel at steady state (namely after the flow of stream 11 has slowed the tip speed to its steady state value, reducing it from a higher value before stream 11 contacted the wheel).

The way in which the force impacts the variables in the equation for relaxation time is related to the way in which the length of heated region 15 affects these variables. Together, these two parameters are the most important factors in determining the residence time of the filaments 14a in heated region 15. More particularly, the force is of utmost importance in determining the velocity of filaments 14a though heated region 15, and the length divided by the velocity provides the residence time. For example, with all of the parameters remaining constant, a decrease in the force imparted to the stream would decrease the velocity of the stream and therefore require a shorter heater. It should be noted, however, that the force cannot decrease to too low a value to avoid having filaments 14a hitting the bottom of heater housing 15a. Although it is possible to tilt heater housing 15a downward as filaments 14a pass through, this can only be done to a certain degree. Also, it is desirable to have the beads pass through a cooling region before landing at a collection bin so that the beads can solidify to a sufficient extent before being contacted with other beads or a collection bin. Thus, the trajectory of the beads is somewhat dictated by the need to cool them (and allow them to solidify sufficiently) before they reach a collection zone.

If the length of the heater is increased, with all of the parameters except force constant, then the force applied must also be increased so that the residence time in the heater remains about the same. The length of a heater is typically fixed after a system has been made, due to the size of heated region 15 and the bulk of a typical heater housing. It might be possible, however, to have a heater of variable length.

The final primary parameter, the composition of the molten glass, is important because both viscosity and surface tension are functions of temperature and the particular composition. The composition of the glass is a function of the glass raw materials and, to a lesser extent, the method and rate of heating. Typically, the composition of the glass is determined based on the particular needs of the glass beads being made. Thus, it is rare, although possible, for an operator to keep all other parameters constant and vary composition in order to optimize roundness in accordance with the present invention. Any glass having composition practical for atomization can be used in connection with the present invention. The composition of two particular glasses which can be used in connection with the present invention, Example 1 and Example 2, are shown below along with the composition of a typical window glass. Also shown below are preferred ranges of various constituents glass used in connection with the present invention. The glasses of Examples 1 and 2 have low viscosities and can be more easily atomized at any given temperature than window glass. It is believed that glasses with up to 65% $SiO_2$ could be atomized with appropriate addition of other glass components to lower viscosity to the 30 poise to 300 poise range in the typical temperature range.

| Component | Window-Glass (wt. %) | Example 1 (wt. %) | Example 2 (wt. %) | Range (wt. %) |
|---|---|---|---|---|
| $SiO_2$ | 72.3 | 61.5 | 60 | 55-65 |
| $Na_2O$ | 14.2 | 15.7 | 11.8 | 10-18 |
| $K_2O$ | 0.2 | 1.8 | 0.2 | 0-5 |
| CaO | 8 | 18.5 | 24.4 | 10-25 |
| MgO | 4 | --- | 3.3 | 0-5 |
| $Al_2O3$ | 1 | 2.85 | 0.3 | 0-5 |
| $B_2O_3$ | --- | --- | --- | 0-5 |

Other factors which are of significance include the shape and number of teeth on the strike wheel. The shape determines the effectiveness of the momentum transferred, and hence the velocity of the molten glass stream as it emerges from the strike wheel. The number of teeth and diameter are contributing factors which affect the eventual bead size.

Regarding the bead size, although this is a function of many factors, the primary factors are the composition of the glass, the diameter of the orifice where the molten steam emerges, and the number of teeth on the strike wheel. Therefore, as soon as the filaments are formed, the diameter of the formed round beads are essentially fixed based on the three factors mentioned above. If smaller diameter beads are desired, the diameter of the orifice of the furnace is decreased or the number of teeth are increased. The lower limit of the number of teeth is dependent on the desired productivity, while the upper limit is dictated by the need to avoid having the back of a first tooth interfere with the flow path of the stream as it emerges from another tooth adjacent the first tooth.

Optimum preferred ranges for parameters of the strike wheel embodiment follow. The diameter of the molten glass stream typically ranges from about 0.5 mm to about 3 mm. The preferred range is between 1 mm to 2 mm. In one embodiment, a strike wheel which can be used in connection with the present invention has an outer diameter of 135 mm and an 8 mm pitch, with 53 teeth. The speed of the strike wheel is around 3,000 to 8,000 rpm. The preferred range of the speed is between about 6,000 rpm to 7,000 rpm for a 130 mm diameter strike wheel.

Optimum preferred ranges of other parameters for any embodiment follow. The temperature of the molten glass is around 1200°C to 1450°C in the heated region. The preferred range is between 1300°C to 1350°C for Glass-C, at which the viscosity is around 30 poise to 100 poise. Generally, viscosity can range from 1 to 1,000 poise and preferably between about 10 and 100 poise. The temperature of the heater is about 1200°C to about 1600°C. The preferred range is between 1500°C to 1600°C. Surface tension can vary between about 50 dyne/cm to about 500 dyne/cm, and preferably between about 250 dyne/cm and about 350 dyne/cm.

Fig. 2 shows an embodiment similar to Fig. 1 except that a rotor instead of a strike wheel is used. In the embodiment shown in Fig. 2, a rotor 31 is disk-shaped and set in a hollow shaft 32 which can be cooled by water. The shaft can be directly actuated by a motor 33. The disk constituting rotor 31 is in a refractory chamber 38 (i.e., the heated zone) formed by a bed plate 39 and a vault 40. Rotor 31 as shown has an axis of rotation generally parallel to the direction of flow of the molten stream to the rotor, although variations of this configuration are possible. The latter has orifices 51 and 52, in which are placed burners fed with air and a combustible gas. The vault also acts as a bottom of a furnace 53 containing molten glass 54 and being sealed by refractory sheeting 55. In addition, vault 40 has drilled into it an orifice 56 which allows a flow of molten glass that can be controlled by a center plunger 57.

Similar to the embodiment shown in Fig. 1, the rotation of rotor 31 imparts a force to the molten stream which causes it to stretch and become thinner under the effect of the centrifugal force and then disburses in particles shortly after having left the periphery of the rotor 31. After passing through heated region 38 and out opening 58, the glass beads are rapidly cooled by the air of cooling zone 59, which is the atmosphere. Pursuing the trajectory of the beads, the beads finally come to rest and are collected at the bottom of channel 60 defined by collection bin 61.

Many of the same parameters are varied in the same way and influence the equation for relaxation time in the same way as in the embodiment of Fig. 1. These parameters include, for example, the heat applied to both the furnace and the heated region, the diameter of orifice 56, the distance $d_1$ between the orifice and the rotor, and the composition of the molten glass. In this embodiment, the heated region completely encloses the rotor so that the length L is defined as the point from stream break-up into filaments to the exit of heated region 38.

As in the embodiment shown in Fig. 1, the diameter of the rotor, the shape of the rotor, and the speed of the rotor all determine the force imparted to and the momentum transferred to the molten glass stream and hence the velocity of the molten glass stream as it emerges from the rotor. With respect to the shape of the rotor, various shapes can be used as disclosed in U.S. Patent No. 3,499,745, including rotors having a smooth outer periphery and a toothed outer periphery. The toothed outer periphery appears to provide a bead size distribution more narrow than when a rotor with a smooth outer periphery is used. Also, a rotor of a larger diameter results in beads having a smaller diameter, with all other parameters remaining constant. In this embodiment, the temperature of the rotor is more important than the temperature of the strike wheel in Fig. 1, because the stream is in contact with the rotor for a longer time; therefore, the temperature of the rotor will have a relatively larger impact on the temperature of the glass stream once it emerges from the spinning rotor.

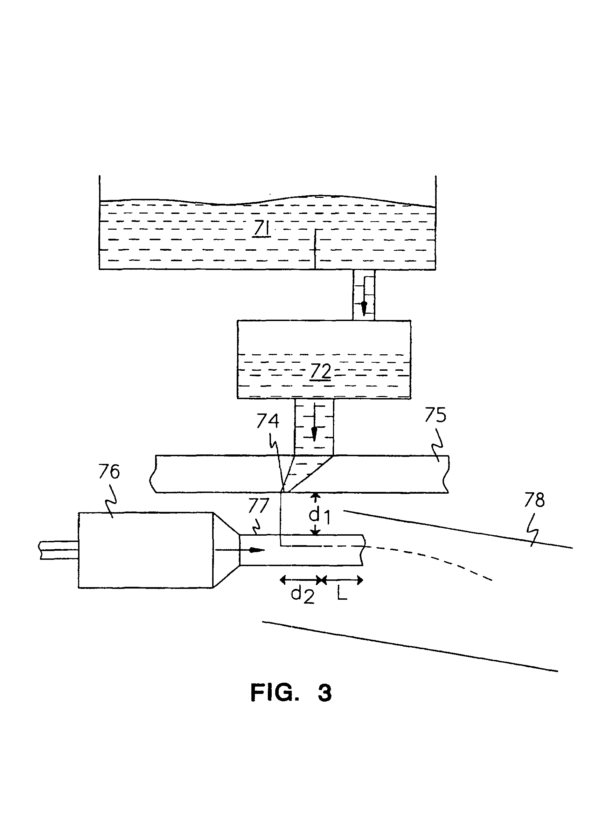

The embodiment shown in Fig. 3 discloses a two-fluid atomization embodiment, including a large furnace 71 from which a stream of molten fluid flows to a forehearth 72 and ultimately out of an orifice 74 through bottom plate 75 and gas burner 76 delivers a flame 77 which flows across the stream from orifice 74. As shown, the direction of the flame is substantially perpendicular to the direction of travel of the molten stream to the flame, although variations of this configuration are possible. In this embodiment, the heated region can either be defined solely by flame 77 or it can be supplemented by an optional heater 78.

Again, many of the same parameters are varied in the same way and influence the equation for relaxation time in the same way as above. Such parameters include the diameter of the orifice 74, the distance $d_1$ between the orifice and the flame from burner 76, the distance L, the heat applied to the system, and the composition of the molten glass.

In the embodiment shown in Fig. 3, the force imparted to the stream is determined by the position of burner 76 and the velocity of the gas from burner 76 with respect to the molten glass stream. In this embodiment, the temperature of the heated region is also dictated by the apparatus imparting the force, namely, the burner 76. The composition of the combustion gas, which might be natural gas, air gas, or oxygas, or some combination thereof, affects the flame temperature; therefore, one way to vary the temperature of the heated region is to alter the composition of the gas in burner 76. In this embodiment, the velocity of the second fluid (i.e., the burning gas) and the position of the burner also affect the eventual size of the beads.

The equation for relaxation time was derived by starting with a force balance acting on and within a droplet during the relaxation time. Relaxation of a droplet is due to the balance between aerodynamic and surface tension forces and inside liquid motion forces. Liquid surface tension was assumed constant (independent of temperature), and viscosity was assumed to be independent of shear rate. Only the internal pressure and viscous force remained after performing an order of magnitude analysis which deleted gravitational force as well as other derivative terms. Thus, the simplified equation correlated the derivative of internal pressure to the viscous forces term. Internal pressure was deemed to be result of the surface force exerted and represented by the capillary pressure, and the viscous force term was simplified to develop the equation listed above for relaxation time. Because certain forces were eliminated, the equation for relaxation time is an approximation, and not an exact equation.

In determining the relaxation time for a given system and carrying out the process of the present invention, it is first appropriate to determine approximate adverse temperatures of the filaments as they travel through a heated region. This can be accomplished by disposing several thermocouples along the heated region and taking an average. With this average, and knowing the particular composition of the molten glass, an approximate average viscosity of the filaments can also be obtained by taking an average at the various temperatures measured throughout the heated region. An average surface tension can also be obtained in the same way, although the surface tension varies very little at the typical temperatures with the typical glass compositions used. Assuming that the surface tension equals approximately 250 dyne/cm, then the relaxation times are shown below for varying particle sizes, 0.5 mm, 1.0 mm, and 1.5 mm, and varying viscosities, 10 poise, 100 poise, and 1000 poise. Once the relaxation time is determined, for a given length L, then the force can be selected to achieve the velocity of the filaments such that the filaments leave the heated region just as they are achieving an exit state at or near the relation point.

| $d_p$ | $\mu$=10 p | $\mu$=100 p | $\mu$=1000 p |
|---|---|---|---|
| 0.5mm | 0.002 s | 0.02 s | 0.2 s |
| 1.0 mm | 0.004 s | 0.04 s | 0.4 s |
| 1.5 mm | 0.006 s | 0.06 s | 0.6 s |

Determining Roundness

To determine percent roundness, one of two tests are used. A first test using a roundometer is used for glass beads having a size of less than about 700 microns in diameter. A second test using a microscope to determine the aspect ratios of a range of beads is used to determine percent roundness if the glass beads have a size of more than 700 microns. Although the test using the roundometer is more quickly carried out for smaller beads, it becomes unworkable as the bead size increases over 700 microns.

According to the first test for beads of less than 700 microns, a roundometer is used and approximately 10 grams of the sample beads are obtained. First, the glass plate of the roundometer is leveled. The glass plate is raised to the required angle for the specification under test, using the adjusting screw between the roundometer base and the feeder vibrator. After tightening, the vibrator's amplitude is set to its minimum and the particles are slowly fed across the whole width of the glass plate at a position on the upper third of the slope, from a height not exceeding 15 mm that they form a single layer on the glass plate. The vibrator amplitude control is adjusted to such position that irregular particles in the upper half of the plate would move up the slope while the true spheres roll down. In particular, the direction of vibration is up such that non-round particles are caused to travel up the plate while round spheres tend to travel down due to the force of gravity. An antistatic sweeper is used periodically.

When all of the true spheres have rolled down the slope into the collecting pan, the remaining particles are brushed into another pan at the upper end of the slope. For purposes of this application, all particles rolling fully down the slope shall be considered "round." The percent of round beads is calculated by dividing the weight of the beads which have rolled down the slope divided by the weight of the sample times 100. A roundometer angle of 1°, 34' is best used for particles having a diameter of between about 500 and 700 microns and an angle of 2° 17' is best used for particles a having a diameter of less than about 500 microns. It should be pointed out, however, that the exact angle is not important for carrying out the present invention because an absolute roundness percentage is not needed for the present invention; instead, only a relative roundness percentage need be identified for the present invention so that a maximum point can be identified.

According to the second test for beads of greater than about 700 microns in diameter, a quantity of beads is placed entirely on an adhesive tape segment of 12 mm width by 75 mm length. The sample is distributed uniformly as a mono-layer on the transparent adhesive tape. The tape is attached by the two ends (free of beads) on a glass slide with the beads facing the glass. The beads are covered with a liquid which has approximately the same refractive index as the glass (1.5 vegetable oil) by injecting the liquid between the tape and the slide using a syringe.

Next, the slide is placed under a microscope with a magnification allowing about 200 particles to cover the view. The count is made of the view from left to right, in three separate views, and a chinagraph pencil can be used to mark off the particles after counting. For simplicity, only defects are counted over the entire viewed, while only one-fourth of the view is counted for total particles and that number is multiplied by four. The total is calculated by adding the numbers of the three views.

For each bead, a Maltese cross is drawn and the length of the two diameters, D1 and D2, is determined or approximated. For purposes of this invention, if the ratio of D1:D2 is within the range of 0.8 to 1.2, then the beads shall be deemed round, while beads having any ratio outside of that range shall be deemed not round. Also, any satellite particles, which comprise one or more small beads sticking to a larger bead, are counted as a single, non-round bead. In this embodiment, the percentage roundness is determined by the difference of the total number of particles from the number of imperfect particles divided by the total number of particles.

Although illustrated and described with reference to certain specific embodiments, the present invention is nevertheless not intended to be limited to the details shown. Rather, various modifications may be made in the details within the scope and range of equivalents of the claims and without departing from the spirit of the invention.

**Claims**

1. A method for making glass beads comprising the steps of:

   heating, with a first amount of heat, glass raw materials to form a bath of molten glass (54) having a composition;
   providing a stream (11) of molten glass flowing from said bath of molten glass (54);
   imparting a force to said stream (11) sufficient to cause said stream (11) to break up into filaments (14a) and to pass through a heated region (15) having a length (L) and to which a second amount of heat is applied;
   adjusting at least one of said first amount of heat, said second amount of heat, said length (L), said force, and said composition to cause said filaments (14a) to reach, upon exiting said heated region, an exit state near a relaxation point at which a maximum percentage of said filaments (14a) have formed round beads (14b), wherein said relaxation point is achieved when a relaxation time has elapsed from the time at which said stream (11) breaks up, and said relaxation time is determined by the equation:

   $$\tau=(d \cdot \mu)/\sigma,$$

   wherein $\tau$ is the relaxation time; d is the diameter of the formed round beads (14b); $\mu$ is the viscosity of said filaments (14a) during the relaxation time; and $\sigma$ is the surface tension of said filaments (14a) during the relaxation time;
   cooling said beads (14b) immediately after said beads (14b) exit said heated region (15); and
   collecting said beads (14b).

2. The method of claim 1, wherein:

   the step of providing said stream (11) of molten glass includes choosing a stream diameter; and
   the step of adjusting comprises adjusting at least one of said first amount of heat, said second amount of heat, said length (L), said force, said composition, and said stream diameter to cause said filaments (14a) to reach, upon exiting said heated region (15), said exit state.

3. The method of claim 1, wherein:

   the step of imparting said force to said stream (11) includes imparting said force after said stream (11) has traveled a drain distance ($d_1$); and

   the step of adjusting comprises adjusting at least one of said first amount of heat, said second amount of heat, said length (L), said force, said composition, and said distance ($d_1$) to cause said filaments (14a) to reach, upon exiting said heated region (15), said exit state.

4. The method of claim 1, wherein:

   the step of providing said heated region (15) includes disposing said heated region (15) such that said filaments (14a), after being imparted with said force, enter said heated region (15) after travelling a cooling distance ($d_2$); and

the step of adjusting comprises adjusting at least one of said first amount of heat, said second amount of heat, said length (L), said force, said composition, and said cooling distance ($d_2$) to cause said filaments (14a) to reach, upon exiting said heated region (15), said exit state.

5. The method of claim 1, wherein said heated region is disposed such that said stream, after being imparted with said force but before breaking up into said filaments (14a), enters said heated region (15).

6. The method of claim 1, wherein:

the step of imparting said force to said stream (11) comprises contacting said stream (11) with a rotating strike wheel (12); and

said heated region (15) is defined by a heater housing (15a) separated from said strike wheel (12) by a cooling distance ($d_2$).

7. The method of claim 1, wherein:

the step of imparting said force to said stream comprises blowing a burning combustible gas across said stream; and

said heated region is defined by the length of the flame (77) of said burning combustible gas.

8. The method of claim 1, wherein:

the step of imparting said force to said stream (11) comprises contacting said stream with a rotating rotor (31); and

said heated region (15) is defined by a bed plate (39) and a vault (40) encompassing said rotor.

9. The method of claim 1, further comprising the step of insulating, to an extent, said molten bath (54) and said heated region (15), and wherein the step of adjusting comprises adjusting at least one of said first amount of heat, said second amount of heat, said length (L), said force, said composition, and said extent of insulating, to cause said filaments to reach, upon exiting said heated region (15), said exit state.

10. The method of claim 1, wherein said exit state is within a first range of said relaxation point such that at least about 90% of said maximum percentage of roundness is achieved.

11. The method of claim 10, wherein said exit state is within a second range of said relaxation point such that at least about 95 % of said maximum percentage of roundness is achieved.

12. A method for making glass beads comprising the steps of:

heating glass raw materials to form a bath of molten glass (54) having a predetermined composition;

providing a stream (11) of molten glass flowing from said bath of molten glass (54);

imparting a force to said stream (11) sufficient to cause said stream (11) to break up into filaments (14a) and to pass through a heated region (15) having a length (L);

determining an approximate average temperature of said filaments (14a) as said filaments (14a) travel through said heated region (15);

determining an approximate average viscosity of said filaments (14a) as said filaments (14a) travel through said heated region (15), based on said composition and said average temperature;

determining an approximate average surface tension of said filaments (14a) as said filaments (14a) travel through said heated region (15), based on said composition and said average temperature;

identifying a diameter *of* said formed round beads (14b);

adjusting said force to cause said filaments (14a) to reach, upon exiting said heated region (15), an exit state near a relaxation point at which a maximum percentage of said filaments (14a) have formed round beads (14b), wherein said relaxation point is achieved when a relaxation time has elapsed from the time at which said stream (11) breaks up, and said relaxation time is determined by the equation:

$$\tau = (d \bullet \mu)/\sigma,$$

wherein $\tau$ is the relaxation time; d is the diameter of the formed round beads (14b); $\mu$ is the viscosity of said filaments (14a) during the relaxation time; and $\sigma$ is the surface tension of said filaments (14a) during the relaxation time;

cooling said beads (14b) immediately after said beads (14b) exit said heated region (15); and

collecting said beads (14b).

13. The method of claim 12, wherein said predetermined composition comprises about 55-65 wt. % $SiO_2$, 10-18 wt. % $Na_2O$, 10-25 wt. % CaO, and, optionally, 0-5 wt. % $K_2O$, 0-5 wt. % MgO, 0-5 wt. % $Al_2O_3$, and 0-5 wt. % $B_2O_3$.

14. The method of claim 12, wherein said approximate average viscosity is between about 1 poise to about 1,000 poise and said approximate average surface tension is between about 50 dyne/cm to about 500 dyne/cm.

15. The method of claim 14, wherein said approximate average viscosity is between about 10 poise and about 100 poise and said approximate average surface tension is between about 250 dyne/cm and about 350 dyne/cm.

## Patentansprüche

1. Verfahren zum Herstellen von Glaskugeln, umfassend die folgenden Schritte:

Aufheizen von Glasrohmaterialien mit einer ersten Wärmemenge, um ein geschmolzenes Glasbad (54) mit einer Zusammensetzung zu bilden;

Bereitstellen eines Stromes (11) von geschmolzenem Glas, welcher aus dem Bad von geschmolzenem Glas (54) ausfließt;

Ausübung einer Kraft auf den Strom (11), welche ausreicht, den Strom (11) in Filamente (14a) aufbrechen und durch einen beheizten Bereich (50) mit einer Länge (L) hindurchtreten zu lassen, in den eine zweite Wärmemenge eingebracht wird;

Einstellung von zumindest einer der Größen erste Wärmemenge, zweite Wärmemenge, Länge (L), Kraft und Zusammensetzung, um die Filamente (14a) beim Verlassen des beheizten Bereichs dazu zu veranlassen, einen Austrittszustand nahe einem Relaxationspunkt zu erreichen, bei dem ein maximaler Prozentsatz der Filamente (14a) runde, Kugeln (14b) gebildet hat, wobei der Relaxationspunkt erreicht ist, wenn eine Relaxationszeit ab der Zeit, bei der der Strom (11) aufgebrochen ist vergangen ist und die Relaxationszeit durch die Gleichung:

$$\tau = (d \times \mu)/\sigma,$$

ermittelt wird, wobei $\tau$ die Relaxationszeit; d der Durchmesser der gebildeten runden Kugel (14b), $\mu$ die Viskosität der Filamente (14a) während der Relaxationszeit; und $\sigma$ die Oberflächenspannung der Filamente (14a) während der Relaxationszeit ist;

Kühlung der Kugeln (14b) unmittelbar nachdem die Kugeln (14b) den beheizten Bereich (15) verlassen haben; und

Sammeln der Kugeln (14b).

2. Verfahren nach Anspruch 1, wobei:

der Schritt des Bereitstellens des Stromes (11) von geschmolzenem Glas das Auswählen eines Stromdurchmessers umfasst; und

der Schritt des Einstellens das Einstellen von zumindest einer der Größen erste Wärmemenge, zweite Wärmemenge, Länge (L), Kraft, Zusammensetzung und Stromdurchmesser umfasst, um die Filamente (14a) beim Verlassen des beheizten Bereichs (15) dazu zu veranlassen, den Austrittszustand anzunehmen.

3. Verfahren nach Anspruch 1, wobei:

der Schritt des Ausübens der Kraft auf den Strom (11) das Ausüben der Kraft umfasst, nachdem der Strom (11) einen Ausflussweg ($d_1$) zurückgelegt hat; und

der Schritt des Einstellens das Einstellen von zumindest einem der Parameter erste Wärmemenge, zweite Wärmemenge, Länge (L), Kraft, Zusammensetzung und Weg ($d_1$) umfasst, um die Filamente (14a) beim Verlassen des beheizten Bereichs (15) dazu zu veranlassen, den Austrittszustand anzunehmen.

4. Verfahren nach Anspruch 1, wobei:

der Schritt des Bereitstellens des beheizten Bereichs (15) das Anordnen des beheizten Bereichs (15) derart umfasst, dass die Filamente (14a), nachdem sie mit der Kraft beaufschlagt wurden und eine Kühlentfernung ($d_2$) zurückgelegt haben, in den beheizten Bereich (15) eintreten; und

der Schritt des Einstellens das Einstellen von zumindest einer der Größen erste Wärmemenge, zweite Wärmemenge, Länge (L), Kraft, Zusammensetzung und der Kühlentfernung ($d_2$) umfasst, um die Filamente (14a) beim Verlassen des beheizten Bereichs (15) dazu zu veranlassen, den Austrittszustand anzunehmen.

5. Verfahren nach Anspruch 1, wobei der beheizte Bereich so angeordnet ist, dass der Strom nachdem er mit der Kraft beaufschlagt wurde, aber bevor er in die Filamente (14a) aufbricht, in den beheizten Bereich (15) eintritt.

6. Verfahren nach Anspruch 1, wobei:

der Schritt der Ausübung der Kraft auf den Strom (11) die Kontaktierung des Stromes (11) mit einem rotierenden Schlagrad (12) umfasst; und

der beheizte Bereich (15) von einem Heizvorrichtungsgehäuse (15a) begrenzt wird, welches von dem Schlagrad (12) durch eine Kühlentfernung ($d_2$) abgetrennt ist.

7. Verfahren nach Anspruch 1, wobei:

der Schritt der Kraftausübung auf den Strom das Blasen eines brennenden brennbaren Gases quer durch den Strom umfasst; und

der beheizte Bereich durch die Länge der Flamme (77) des brennenden brennbaren Gases festgelegt ist.

8. Verfahren nach Anspruch 1, wobei:

der Schritt des Aufbringens der Kraft auf den Strom (11) das Kontaktieren des Stromes mit einem rotierenden Rotor (31) umfasst; und

der beheizte Bereich (15) durch eine Bodenplatte (39) und ein Gewölbe (40), welche den Rotor umgeben begrenzt wird.

9. Verfahren nach Anspruch 1, zudem umfassend den Schritt der Isolierung des geschmolzenen Bades (54) und des beheizten Bereichs (15) in einem Ausmaß, und wobei der Schritt des Einstellens das Einstellen von zumindest einer der Größen erste Wärmemenge, zweite Wärmemenge, Länge (L), Kraft, Zusammensetzung und Ausmaß der Isolierung umfasst, um die Filamente beim Verlassen des beheizten Abschnitts (15) dazu zu veranlassen, den Austrittszustand anzunehmen.

**10.** Verfahren nach Anspruch 1, wobei der Austrittszustand sich innerhalb eines ersten Bereichs des Relaxationspunktes derart befindet, dass zumindest etwa 90 % des maximalen Prozentsatzes der Rundheit erreicht wird.

**11.** Verfahren nach Anspruch 10, wobei der Austrittszustand sich innerhalb eines zweiten Bereichs des Relaxationspunktes derart befindet, dass zumindest etwa 95 % des maximalen Prozentsatzes der Rundheit erreicht werden.

**12.** Verfahren zum Herstellen von Glaskugeln, umfassend die Schritte:

Aufheizen von Glasrohmaterial zur Bildung eines Bades aus geschmolzenem Glas (54) mit einer vorbestimmten Zusammensetzung;

Bereitstellung eines Stromes (11) von geschmolzenem Glas, welcher aus dem Bad von geschmolzenem Glas (54) ausfließt;

Ausübung einer Kraft auf den Strom (11), welche ausreicht den Strom (11) in Filamente (14a) aufzubrechen und durch einen beheizten Bereich (15) mit einer Länge (L) hindurchtreten zu lassen;

Ermittlung einer angenäherten Durchschnittstemperatur der Filamente (14a), während die Filamente (14a) durch den beheizten Bereich (15) hindurchtreten;

Ermittlung einer angenäherten Durchschnittsviskosität der Filmente (14a), während die Filamente (14a) durch den beheizten Bereich (15) hindurchtreten, basierend auf der Zusammensetzung und der Durchschnittstemperatur;

Ermittlung einer angenäherten durchschnittlichen Oberflächenspannung der Filamente (14a), während die Filamente (14a) durch den beheizten Bereich (15) hindurchtreten, basierend auf der Zusammensetzung und der Durchschnittstemperatur;

Ermittlung eines Durchmessers der gebildeten runden Kugeln (14b);

Einstellung der Kraft zur Veranlassung der Filamente (14a) beim Verlassen des beheizten Bereichs (15) einen Austrittszustand nahe eines Relaxationspunktes, bei welchem ein maximaler Prozentsatz der Filamente (14a) runde Kugeln (14b) gebildet hat, einzunehmen, wobei der Relaxationspunkt erreicht ist, wenn eine Relaxationszeit ab der Zeit bei der der Strom (11) aufgebrochen ist vergangen ist und die Relaxationszeit durch die Gleichung:

$$\tau = (d \times \mu)/\sigma$$

ermittelt wird, wobei $\tau$ die Relaxationszeit, d der Durchmesser der gebildeten runden Kugel (14b), $\mu$ die Viskosität der Filamente (14a) während der Relaxationszeit und $\sigma$ die Oberflächenspannung der Filamente (14a) während der Relaxationszeit ist;

Abkühlen der Kugeln (14b) unmittelbar nachdem die Kugeln (14b) den beheizten Bereich (15) verlassen; und

Sammeln der Kugeln (14b).

**13.** Verfahren nach Anspruch 12, wobei die vorbestimmte Zusammensetzung etwa 55 - 65 Gew.-% $SiO_2$, 10 - 18 Gew.-% $Na_2O$, 10 - 25 Gew.-% CaO, und wahlweise 0 - 5 Gew.-% $K_2O$, 0 - 5 Gew.-% MgO, 0 - 5 Gew.-% $Al_2O_3$ und 0 - 5 Gew.-% $B_2O_3$ umfasst.

**14.** Verfahren nach Anspruch 12, wobei die angenäherte Durchschnittsviskosität zwischen etwa 1 poise und etwa 1.000 poise liegt und die angenäherte Durchschnittsoberflächenspannung zwischen etwa 50 dyne/cm bis etwa 50 dyne/cm liegt.

**15.** Verfahren nach Anspruch 14, wobei die angenäherte Durchschnittsviskosität zwischen etwa 10 poise und etwa 100 poise und die angenäherte Durchschnittsoberflächenspännung zwischen etwa 250 dyne/cm und etwa 350 dyne/cm liegt.

## Revendications

**1.** Procédé pour fabriquer des billes de verre, comprenant les étapes consistant à :

chauffer, avec une première quantité de chaleur, des matières premières de verre pour former un bain de verre en fusion (54) ayant une certaine composition ;
réaliser un courant (11) de verre en fusion s'écoulant depuis ledit bain de verre en fusion (54) ;
communiquer audit courant (11) une force suffisante pour amener ledit courant (11) à se diviser en filaments (14a) et à passer par une région chauffée (15) ayant une longueur (L) et à laquelle une deuxième quantité de chaleur est appliquée ;
régler l'une au moins desdites première quantité de chaleur, deuxième quantité de chaleur, longueur (L), force et composition pour amener lesdits filaments (14a) à atteindre, au moment où ils sortent de ladite région chauffée, un état de sortie près d'un point de relaxation où un pourcentage maximal desdits filaments (14a) ont formé des billes rondes (14b), ledit point de relaxation étant réalisé lorsqu'un temps de relaxation s'est écoulé depuis l'instant où ledit courant (11) s'est divisé, et ledit temps de relaxation étant déterminé par l'équation :

$$\tau = (d \cdot \mu)/\sigma,$$

où $\tau$ désigne le temps de relaxation, d désigne le diamètre des billes rondes formées (14b), $\mu$ désigne la viscosité desdits filaments (14a) pendant le temps de relaxation et $\sigma$ est la tension de surface desdits filaments (14a) pendant le temps de relaxation.
refroidir lesdites billes (14b) juste après que lesdites billes (14b) sont sorties de ladite région chauffée (15) ; et
recueillir lesdites billes (14b).

**2.** Procédé selon la revendication 1, dans lequel :

l'étape consistant à réaliser ledit courant (11) de verre en fusion comporte le choix d'un diamètre du courant ; et
l'étape de réglage comporte le réglage de l'un au moins desdits première quantité de chaleur, deuxième quantité de chaleur, longueur (L), force, composition et diamètre du courant pour amener lesdits filaments (14a) à atteindre, à leur sortie de ladite région chauffée (15), ledit état de sortie.

**3.** Procédé selon la revendication 1, dans lequel :

l'étape consistant à communiquer ladite force audit courant (11) comporte la communication de ladite force après que ledit courant (11) a parcouru une distance d'évacuation ($d_1$) ; et
l'étape de réglage consiste à régler l'une au moins desdites première quantité de chaleur, deuxième quantité de chaleur, longueur (L), force, composition et distance ($d_1$) pour amener lesdits filaments (14a) à atteindre, au moment où ils quittent ladite région chauffée (15), ledit état de sortie.

**4.** Procédé selon la revendication 1, dans lequel :

l'étape consistant à réaliser ladite région chauffée (15) comporte l'opération consistant à disposer ladite région chauffée (15) de telle sorte que lesdits filaments (14a), après que ladite force leur a été communiquée, pénètrent dans ladite région chauffée (15) après avoir parcouru une distance de refroidissement ($d_2$) ; et
l'étape de réglage comporte un réglage de l'une au moins desdites première quantité de chaleur, deuxième quantité de chaleur, longueur (L), force, composition et distance de refroidissement ($d_2$) pour amener les filaments (14a) à atteindre, au moment où ils quittent ladite région chauffée (15), ledit état de sortie

**5.** Procédé selon la revendication 1, dans lequel ladite région chauffée est disposée de telle sorte que ledit courant, après que ladite force lui a été communiquée mais avant sa division en filaments (14a), pénètre dans ladite région chauffée (15).

**6.** Procédé selon la revendication 1, dans lequel :

l'étape consistant à communiquer ladite force audit courant (11) consiste à mette ledit courant (11) au contact d'une roue rotative (12) d'inversion de marche ; et
ladite région chauffée (15) est définie par un compartiment de chauffage (15a) séparé de ladite roue (12) d'inversion de marche par une distance de refroidissement ($d_2$).

**7.** Procédé selon la revendication 1, dans lequel :

l'étape consistant à communiquer ladite force audit courant consiste à insuffler un gaz combustible enflammé à travers ledit courant ; et
ladite région chauffée est définie par la longueur de la flamme (17) dudit gaz combustible enflammé.

**8.** Procédé selon la revendication 1, dans lequel :

l'étape consistant à communiquer ladite force audit courant (11) consiste à mettre ledit courant au contact d'un rotor (31) en rotation ; et
ladite région chauffée (15) est définie par une plaque de base (39) et une voûte (40) enveloppant ledit rotor.

**9.** Procédé selon la revendication 1, comprenant en outre l'étape consistant à isoler, dans une certaine mesure, ledit bain (54) en fusion et ladite région chauffée (15), et dans lequel l'étape de réglage consiste à régler l'une au moins desdites première quantité de chaleur, deuxième quantité de chaleur, longueur (L), force, composition et ampleur d'isolation pour amener les filaments à atteindre, au moment où ils quittent ladite région chauffée (15), ledit état de sortie.

**10.** Procédé selon la revendication 1, dans lequel ledit état de sortie se situe dans des premières limites dudit point de relaxation de façon qu'au moins environ 90% dudit pourcentage maximal de rotondité soit obtenu.

**11.** Procédé selon la revendication 10, dans lequel ledit état de sortie se situe dans des deuxièmes limites dudit point de relaxation de façon qu'au moins environ 95% dudit pourcentage maximal de rotondité soit obtenu.

**12.** Procédé pour fabriquer des billes de verre, comprenant les étapes consistant à :

chauffer des matières premières de verre pour former un bain de verre en fusion (54) ayant une composition prédéterminée ;
réaliser un courant (11) de verre fondu sortant dudit bain de verre en fusion (54) ;
communiquer audit courant (11) une force suffisante pour amener ledit courant (11) à se diviser en filaments (14a) et à passer à travers une région chauffée (15) ayant une longueur (L) ;
déterminer une température moyenne approximative desdits filaments (14a) lorsque lesdits filaments (14a) traversent ladite région chauffée (15) ;
déterminer une viscosité moyenne approximative desdits filaments (14a) pendant que lesdits filaments (14a) traversent ladite région chauffée (15), d'après ladite composition et ladite température moyenne ;
déterminer une tension de surface moyenne approximative desdits filaments (14a) pendant que lesdits filaments (14a) traversent ladite région chauffée (15) d'après ladite composition et ladite température moyenne ;
identifier un diamètre desdites billes rondes formées (14b) ;
régler ladite force pour amener lesdits filaments (14a) à atteindre, au moment où ils sortent de ladite région chauffée (15), un état de sortie proche d'un point de relaxation où un pourcentage maximal desdits filaments (14a) ont formé des billes rondes (14b), ledit point de relaxation étant obtenu lorsqu'un temps de relaxation s'est écoulé depuis l'instant où ledit courant (11) s'est divisé, et ledit temps de relaxation étant déterminé par l'équation :

$$\tau = (d \cdot \mu)/\sigma,$$

où $\tau$ désigne le temps de relaxation ; d désigne le diamètre des billes rondes formées (14b) ; $\mu$ désigne la viscosité desdits filaments (14a) pendant le temps de relaxation ; et $\sigma$ est la tension de surface desdits filaments (14a) pendant le temps de relaxation ;
refroidir lesdites billes (14b) juste après la sortie lesdites billes (14b) de ladite région chauffée (15) ; et

recueillir lesdites billes (14b).

13. Procédé selon la revendication 12, dans lequel ladite composition prédéterminée comprend environ 55 à 65 % en poids de $SiO_2$, 10 à 18% en poids de $Na_2O$, 10 à 25% en poids de CaO et, éventuellement, 0,5% en poids de $K_2O$, 0,5% en poids de MgO, 0,5% en poids de $Al_2O_3$ et 0,5% en poids de $B_2O_3$.

14. Procédé selon la revendication 12, dans lequel ladite viscosité moyenne approximative est comprise entre environ 1 poise et environ 1000 poises et ladite tension de surface moyenne approximative est comprise entre environ 50 dynes/cm et environ 500 dynes/cm.

15. Procédé selon la revendication 14, dans lequel ladite viscosité approximative moyenne est comprise entre environ 10 poises et environ 100 poises et ladite tension de surface moyenne approximative est comprise entre environ 250 dynes/cm et environ 350 dynes/cm.

FIG. 1

FIG. 2

FIG. 3